# EUROPEAN PATENT APPLICATION

(11) **EP 4 163 803 A1**
(43) Date of publication of application: **12.04.2023**
(21) Application number: 21837643.2
(22) Date of filing: 25.05.2021
(51) Int. Cl.: G06F 16/45

(54) **SAMPLE DATA ANNOTATION SYSTEM, METHOD, AND RELATED DEVICE**

(30) Priority: 06.07.2020 CN 202010642572
(71) Applicant: Huawei Technologies Co., Ltd., Longgang District, Shenzhen, Guangdong 518129 (CN)
(72) Inventor: CHANG, Qinglong, Shenzhen, Guangdong 518129 (CN); HU, Xinyu, Shenzhen, Guangdong 518129 (CN); ZHANG, Yanfang, Shenzhen, Guangdong 518129 (CN); SUN, Xudong, Shenzhen, Guangdong 518129 (CN); ZHANG, Liang, Shenzhen, Guangdong 518129 (CN)
(74) Representative: Goddar, Heinz J.
(86) International application number: PCT/CN2021/095786
(87) International publication number: WO 2022/007527

(57) **Abstract**

Disclosed are a sample data annotation system, an annotation method applied to the sample data annotation system, and a related apparatus. The sample data annotation system includes an edge node and a central node. The edge node obtains a key feature of sample data (S311), determines, based on the key feature, whether the sample data is unknown sample data (S312), when the sample data is unknown sample data, performs annotation processing on the sample data to obtain a first annotation result (S313), and sends the first annotation result to the central node (S314). The central node receives the first annotation result, and determines whether the first annotation result indicates successful annotation (S321); and when the first annotation result indicates that the unknown sample data is successfully annotated, performs consistency processing on the first annotation result to obtain a second annotation result (S322), or when the annotation result indicates that the unknown sample data fails to be annotated, performs annotation processing on the unknown sample data to obtain a third annotation result (S323).

## Description

This application claims priority to Chinese Patent Application No. 202010642572.5, filed with the China National Intellectual Property Administration on July 6, 2020 and entitled "SAMPLE DATA ANNOTATION SYSTEM AND METHOD, AND RELATED DEVICE", which is incorporated herein by reference in its entirety.

### TECHNICAL FIELD

This application relates to the field of computer technologies, and in particular, to a sample data annotation system and method, and a related device.

### BACKGROUND

Recently, artificial intelligence (artificial intelligence, AI) has been applied in more and more fields. Most existing AI technologies, including supervised learning (supervised learning), deep learning (deep learning, DL), and the like, are all based on a large quantity of annotated data sets. Annotating refers to generating and/or adding a label for sample data that can represent a classification of the sample data. An existing general annotation method is to collectively annotate sample data at a central node: Each edge client node (referred to as an edge node) uploads a sample feature (including sample data or a key feature of the sample data) that needs to be annotated to the central node, and the central node annotates the sample feature. Another annotation method is to annotate the sample data at the edge node, that is, after collecting the sample feature that needs to be annotated, each edge node directly performs annotation operations locally. The two annotation manners have a defect. On one hand, the former is limited to a requirement for privacy protection. For example, in a federated learning (federated learning, FL) field, sample data of an edge node (for example, a personal photo stored on a personal mobile phone terminal and a patient profile of a hospital) cannot be uploaded to a central node for annotation. On the other hand, uploading all sample features of the edge node to the central node requires a large amount of data communication, and causes an excessive communication load. In addition, all annotations need to be completed at the central node, and a bottleneck easily forms at the central node. Because the latter is limited by a condition of a low computing power of the edge node, label annotation efficiency of the edge node is not high. In addition, a label annotation method of the edge node is usually simpler than that of center annotation, which may cause a case in which a specific sample feature cannot be annotated or is incorrectly annotated.

Therefore, how to improve annotation efficiency and annotation quality of sample data becomes a research problem in the AI field.

### SUMMARY

This application provides a sample data annotation system and method, and a related device, so as to improve annotation efficiency and annotation quality of AI sample data.

According to a first aspect, the present invention provides a sample data annotation system, including an edge node and a central node, and the central node is connected to the edge node. The edge node is configured to: obtain a key feature of sample data; determine, based on the key feature, whether the sample data is unknown sample data; when the sample data is unknown sample data, perform annotation processing on the sample data to obtain a first annotation result; and upload the first annotation result to the central node. The central node is configured to: receive a first annotation result sent by the edge node; perform consistency processing on a first annotation result indicating that annotation for an unknown sample succeeds, to obtain a second annotation result; and perform annotation processing on a first annotation result indicating that annotation for an unknown sample fails, to obtain a third annotation result.

In this application, the edge node annotates the sample data, thereby improving annotation efficiency. In addition, because of an objective condition such as relatively low computing power of the edge node, a first annotation result obtained after annotating by the edge node may have an annotation error or an annotation failure. After the first annotation result is sent to the central node, the central node may correct or annotate the first annotation result again, thereby improving annotation quality.

In an optional implementation, the edge node determines, based on an unknown sample model and the key feature obtained from the sample data, whether the sample data is unknown sample data.

In an optional implementation, the unknown sample model is generated based on a plurality of key features obtained from a known annotation result set. The known annotation result set includes an annotation result obtained by the central node before the unknown sample model is generated. These annotation results include the second annotation result generated after the central node performs consistency processing and/or the third annotation result obtained after the central node performs annotation.

In an optional implementation, the unknown sample model may further include a multidimensional coordinate space, and the multidimensional coordinate space is generated by the central node based on the key feature of the known annotation result set. A coordinate distance is obtained based on the key feature of the sample data or a mapping feature of the key feature, and it is determined, based on a correlation indicated by the coordinate distance, whether the sample data is unknown sample data. If a larger coordinate distance indicates a lower correlation, the sample data is determined as unknown sample data when the correlation is higher than a preset threshold. If a lower coordinate distance indicates a lower correlation, the sample data is determined as unknown sample data when the correlation is lower than the preset threshold.

In an optional implementation, the unknown sample model may further include a neural network model. An inference (Inference) action is performed on the sample data by using the neural network model. If a correct inference result cannot be obtained, it is considered that the sample data is unknown sample data.

In an optional implementation, when the first annotation result indicates that the unknown sample data is successfully annotated, the first annotation result includes a sample identifier of the sample data, a sample feature of the sample data, and a label determined by the edge node for the sample data; or when the first annotation result indicates that the unknown sample data fails to be annotated, the first annotation result includes a sample identifier of the sample data and a sample feature of the sample data. In an optional implementation, a sample feature of the first annotation result includes the sample data and/or the key feature.

In an optional implementation, when consistency processing is performed on the first annotation result, the central node performs clustering on a plurality of first annotation results including the first annotation result through similarity division, to obtain a group corresponding to the first annotation result. Further, in an optional implementation, the central node performs clustering, in an unsupervised manner, on the plurality of first annotation results including the first annotation result, and the unsupervised manner includes one or more of the following: K-MEANS and KNN.

In an optional implementation, when labels of annotation results in the group are inconsistent, the central node performs an ensemble decision on labels of all annotation results in the group to obtain a group label, and obtains the second annotation result based on the group label. In an optional implementation, the ensemble decision includes a voting method or a weighted voting method.

In an optional implementation, the central node generates a new unknown sample model or updates the unknown sample data model based on the second annotation result and/or the third annotation result.

According to a second aspect, this application discloses a sample data annotation method, applied to an edge node of a sample annotation system. The method includes: obtaining a key feature of sample data; determining, based on the key feature, whether the sample data is unknown sample data; when the sample data is unknown sample data, performing annotation processing on the unknown sample data to obtain a first annotation result; and sending the first annotation result to a central node.

In this method, the edge node only annotates sample data that needs to be annotated, which can reduce a quantity of sample data that needs to be annotated, and sends an annotated first annotation result to the central node for further processing, thereby improving annotation quality.

In an optional implementation, the edge node determines, based on an unknown sample model and the key feature, whether the sample data is unknown sample data.

In an optional implementation, the unknown sample model is generated based on a plurality of key features obtained from a known annotation result set. The known annotation result set includes an annotation result that is successfully annotated and obtained by the central node before the unknown sample model is generated.

In an optional implementation, the unknown sample model may further include a multidimensional coordinate space, and the multidimensional coordinate space is generated by the central node of the sample data annotation system based on the key feature of the known annotation result set. A coordinate distance is obtained based on the key feature of the sample data or a mapping feature of the key feature, and it is determined, based on a correlation indicated by the coordinate distance, whether the sample data is unknown sample data. If a larger coordinate distance indicates a lower correlation, the sample data is determined as unknown sample data when the correlation is higher than a preset threshold. If a lower coordinate distance indicates a lower correlation, the sample data is determined as unknown sample data when the correlation is lower than the preset threshold.

In an optional implementation, the unknown sample model may further include a neural network model. An inference (Inference) action is performed on the sample data by using the neural network model. If a correct inference result cannot be obtained, it is considered that the sample data is unknown sample data.

In an optional implementation, when the first annotation result indicates that the unknown sample data is successfully annotated, the first annotation result includes a sample identifier of the sample data, a sample feature of the sample data, and a label determined by the edge node for the sample data; or when the first annotation result indicates that the unknown sample data fails to be annotated, the first annotation result includes a sample identifier of the sample data and a sample feature of the sample data. In an optional implementation, a sample feature of the first annotation result includes the sample data and/or the key feature.

According to a third aspect, this application discloses a sample data annotation method, and the method is applied to a central node of a sample annotation system. The method includes: receiving a first annotation result sent by an edge node in the sample annotation system, where the first annotation result is obtained by the edge node by performing annotation processing on unknown sample data; and when the first annotation result indicates that the unknown sample data is successfully annotated, performing consistency processing on the first annotation result to obtain a second annotation result; or when the annotation result indicates that the unknown sample data fails to be annotated, performing annotation processing on the unknown sample data to obtain a third annotation result.

In this method, the central node performs secondary processing on the first annotation result sent by the edge node, thereby improving annotation quality of sample data.

In an optional implementation, when consistency processing is performed on the first annotation result, the central node performs clustering on a plurality of first annotation results including the first annotation result through similarity division, to obtain a group corresponding to the first annotation result. Further, in an optional implementation, the central node performs clustering, in an unsupervised manner, on the plurality of first annotation results including the first annotation result, and the unsupervised manner includes one or more of the following: K-MEANS and KNN.

In an optional implementation, when labels of annotation results in the group are inconsistent, the central node performs an ensemble decision on labels of all annotation results in the group to obtain a group label, and obtains the second annotation result based on the group label. In an optional implementation, the ensemble decision includes a voting method or a weighted voting method.

In an optional implementation, the central node generates a new unknown sample model or updates an unknown sample data model based on the second annotation result and/or the third annotation result.

According to a fourth aspect, this application discloses a node, and the node includes a function module for performing the sample annotation method provided in the second aspect or any possible design of the second aspect. In this application, division of the function module is not limited, and the function module may be correspondingly divided according to a procedure step of the sample annotation method in the second aspect, or may be divided according to a specific implementation requirement.

According to a fifth aspect, this application discloses a node, and the node includes a function module for performing the sample annotation method provided in the third aspect or any possible design of the third aspect. In this application, division of the function module is not limited, and the function module may be correspondingly divided according to a procedure step of the sample annotation method in the second aspect, or may be divided according to a specific implementation requirement.

Implementations of the different aspects of this application may be mutually combined or referenced when there is no conflict.

According to a sixth aspect, this application discloses computer program code. When instructions included in the program code are executed by a computer, the computer can implement the sample data annotation method in the second aspect or any one of the possible implementations of the second aspect.

According to a seventh aspect, this application discloses computer program code. When instructions included in the program code are executed by a computer, the computer can implement the sample data annotation method in the third aspect or any one of the possible implementations of the third aspect.

According to an eighth aspect, this application discloses a computer-readable storage medium, where the computer-readable storage medium stores computer program instructions. When the computer program instructions run on a computer, the computer performs the sample data annotation method in the second aspect or any one of the possible implementations of the second aspect.

According to a ninth aspect, this application discloses a computer-readable storage medium, where the computer-readable storage medium stores computer program instructions. When the computer program instructions run on a computer, the computer performs the sample data annotation method in the third aspect or any one of the possible implementations of the third aspect.

### BRIEF DESCRIPTION OF DRAWINGS

To describe the technical solutions in embodiments of the present invention more clearly, the following briefly describes the accompanying drawings for describing embodiments. It is clear that the accompanying drawings in the following descriptions show merely some embodiments of the present invention.
FIG. 1 is a schematic diagram of a structure of a sample data annotation system according to an embodiment of the present invention;
FIG. 2 is a schematic diagram of a structure of a central node or an edge node of a sample data annotation system according to an embodiment of the present invention;
FIG. 3 is a schematic flowchart of a sample data annotation method according to an embodiment of the present invention;
FIG. 4 is a schematic diagram of a format of an annotation result according to an embodiment of the present invention;
FIG. 5A is a schematic diagram of a module of an edge node according to an embodiment of the present invention;
FIG. 5B is a schematic diagram of a module of a central node according to an embodiment of the present invention; and
FIG. 6 is a schematic diagram of a multidimensional coordinate space according to an embodiment of the present invention.

### DESCRIPTION OF EMBODIMENTS

To make a person skilled in the art understand the technical solutions in the present invention better, the following clearly describes the technical solutions in embodiments of the present invention with reference to the accompanying drawings in embodiments of the present invention. It is clear that the described embodiments are a part rather than all of embodiments of the present invention.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In the descriptions of embodiment of this application, unless otherwise stated, "a plurality of" means two or more than two. For example, a plurality of nodes refer to two or more nodes. "At least one" means any quantity, such as one, two, or more. "A and/or B" may be only A, only B, or include A and B. "At least one of A, B, and C" may be only A, only B, only C, or include A and B, include B and C, include A and C, or include A, B, and C. In this application, terms such as "first" and "second" are used only to distinguish between different objects, and are not used to indicate priorities or importance of the objects.

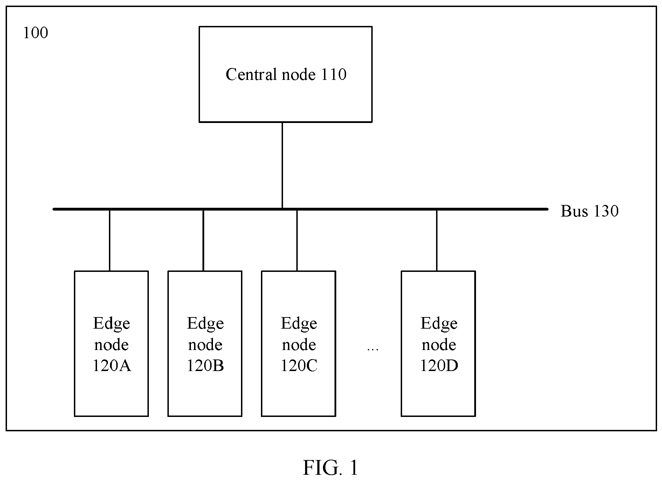

To improve annotation efficiency and quality of sample data, in an implementation, as shown in FIG. 1, a sample data annotation system 100 is provided, including a central node 110 and a plurality of edge nodes 120. The central node 110 is connected to edge nodes 120A, 120B, 120C, and 120D by using a bus 130. A network interface may be an interface connected to an internal network, or may be an interface connected to the Internet. That is, by using the bus 130, the annotation system may be deployed on an internal network (a campus network, a VPN, a Cloud, or the like), or may be deployed on a public network.

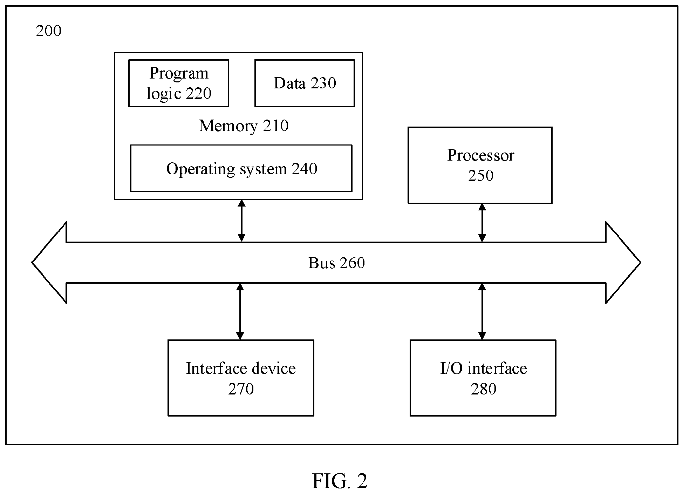

The central node 110 or the edge node 120 may be deployed on at least one processor platform 200, as shown in FIG. 2. The processor platform 200 may be a server, a personal computer, a mobile device (such as a phone, a smartphone, a tablet computer such as an iPad), a personal digital assistant (PDA), an Internet device, an embedded device, or any other type of computing device. Further, the processor platform 200 includes a memory 210, a processor 250, a bus 260, an interface device 270, and an I/O interface. The memory 210 is configured to store program logic 220 (such as software) and data 230, where the program logic 220 includes logic modules of the annotation system 100 for performing functions such as consistency processing and annotation. The data 230 may include sample data, an annotation result, an unknown sample data model, and the like. The memory 210 may further include an operating system 240. The processor 250 may include a plurality of processor cores (core), or may be a very large scale integrated circuit. The processor 250 may execute the program logic 220 by using the operating system 240, and process the data 230. The bus 260 is configured to communicate among the memory 210, the processor 250, the interface device 270, and the I/O interface 280. A user may interact with the processor platform 200 by using the interface device 270, such as a keyboard or a mouse. The processor platform 200 may further communicate with another one or more processor platforms by using an I/O interface, such as a network or a modem. All components of the processor platform 200 provided in this embodiment of this application are merely examples. A person skilled in the art may add or reduce a component as required, or may divide a function of one component to be implemented by a plurality of components.

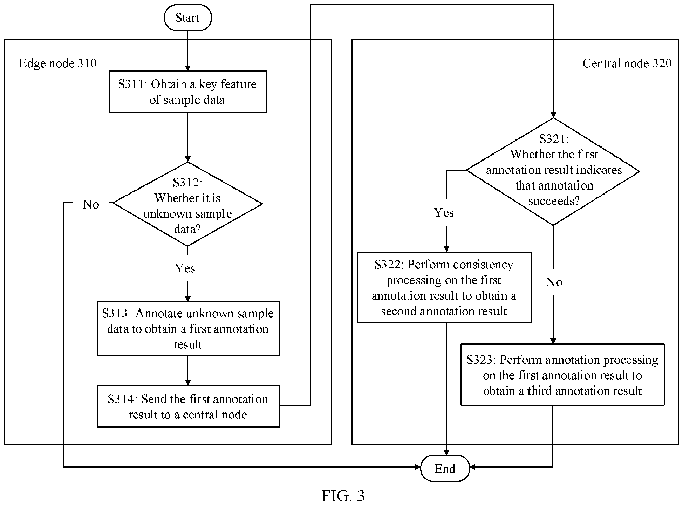

The sample data annotation system 100 may start one or more sample data annotation tasks, and each sample data annotation task may be started periodically (for example, a set time or a set period) or based on an external trigger condition (for example, original sample data reaches a threshold) or based on an instruction. The following describes, according to FIG. 3, a process in which the sample data annotation system 100 performs sample data annotation. Unless otherwise noted, this process is applicable to any annotation task of the sample annotation system 100.

FIG. 3 is a sample data annotation method according to an embodiment of this application, and the method includes steps S311-S314 and S321-S323. In a specific implementation, steps in FIG. 3 may be modified or deleted as required, and a sequence of any step in FIG. 3 may be adjusted as required.

Steps S311-S314 disclose a sample data annotation method applied to the edge node 310. In step S311, the edge node 310 obtains a key feature of sample data. Obtaining the key feature of the sample data may be that the edge node 310 extracts the key feature from the sample data after obtaining the sample data, or may receive a key feature of sample data sent by another device. Step 311 may be triggered when the edge node 310 receives the sample data, or may be periodically triggered. The key feature is a related attribute of the sample data, such as one or more of a total length of the sample data, a packet average interval of the sample data, an uplink-downlink direction, a collection starting time of the sample data, and/or an end period.

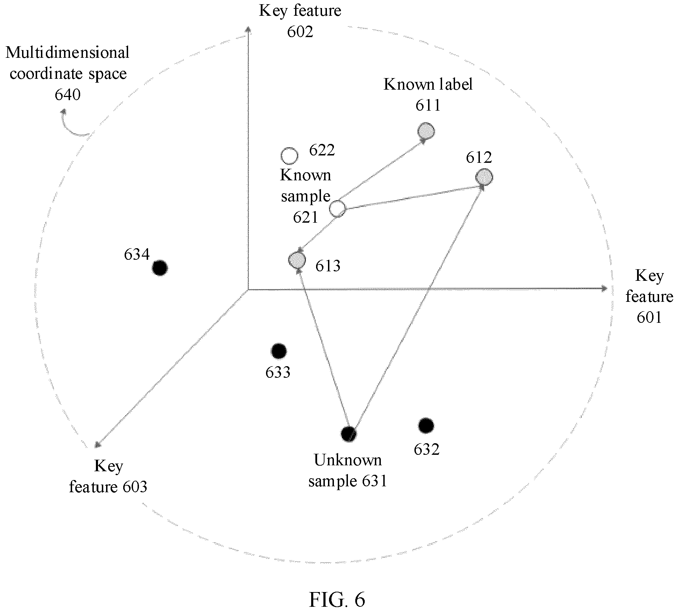

In step S312, the edge node 310 determines, based on the obtained key feature, whether the sample data is unknown sample data. In an implementation, the edge node 310 maps the key feature obtained in step S311 to an unknown sample data model of the edge node to determine whether the sample data is unknown sample data. In an implementation, the unknown sample data model is generated by the central node 320 based on a plurality of key features obtained from a known annotation result set. The known annotation result set includes a plurality of annotation results that are successfully annotated and obtained by the central node 320 before the unknown sample data model is generated. Each annotation result includes a sample identifier of the sample data, a sample feature of the sample data, and a label of the sample data. The label may be annotated by the central node 320, or may be annotated by the edge node 310 and obtained by performing consistency processing by the central node. In another implementation, when the sample data annotation system 100 performs annotation for the first time, the central node 320 generates a known annotation result set based on an empty annotation result set or an externally loaded annotation result set. In an implementation, the unknown sample data model includes a multidimensional coordinate space, and the multidimensional coordinate space is generated by the central node 320 based on the key feature of the known annotation result set. As shown in FIG. 6, a multidimensional coordinate space 640 is a three-dimensional coordinate space formed by key features 601-603. The key features 601-603 may be key features of the sample data, or may be features mapped by the key features of the sample data. There may be one or more key features or mapped features. In an example, the sample data annotation system 100 may map 10 key features of the sample data into one three-dimensional coordinate space, or may map 10 key features of the sample data into another 10-dimensional coordinate space.

In the sample data annotation system 100, a correlation between sample data may be represented by using a coordinate distance. When the correlation is lower than a preset threshold, the sample data is determined as unknown sample data. The edge node 310 may preset one or more thresholds. If a larger coordinate distance indicates a lower correlation, a specific implementation of step S312 may be that, for example, when the key feature of the sample data or the mapping feature of the key feature is obtained in step S310, and a coordinate distance in the multidimensional coordinate space is greater than or equal to a preset threshold, it may be determined that the sample data is unknown sample data. If a smaller coordinate distance indicates a lower correlation, a specific implementation of step S312 may be that, for example, when the key feature of the sample data or the mapping feature of the key feature is obtained in step S310, and a coordinate distance in the multidimensional coordinate space is less than or equal to a preset threshold, it may be determined that the sample data is unknown sample data. As shown in Figure 6, 611-613 are known labels, and the known labels are labels of sample data of the known annotation result set. After key features of to-be-annotated sample data (621-622 and 631-634) are mapped to the multidimensional coordinate space 640, coordinate distances to the known labels 611-613 are generated based on multidimensional coordinates of the to-be-annotated sample data (621-622 and 631-634). In FIG. 6, a larger coordinate distance indicates a lower identifier correlation. Coordinate distances of 621 and 622 are lower than a preset threshold, and it is determined that 621 and 622 are known sample data, while coordinate distances of 631-634 are greater than the preset threshold, and it is determined that 631-634 are unknown sample data.

In an implementation, the unknown sample data model further includes a neural network model. An inference (Inference) action may be performed on the key feature obtained in step S311 by using the neural network model. When the neural network model cannot obtain a correct inference result, it is considered that the sample data is unknown sample data.

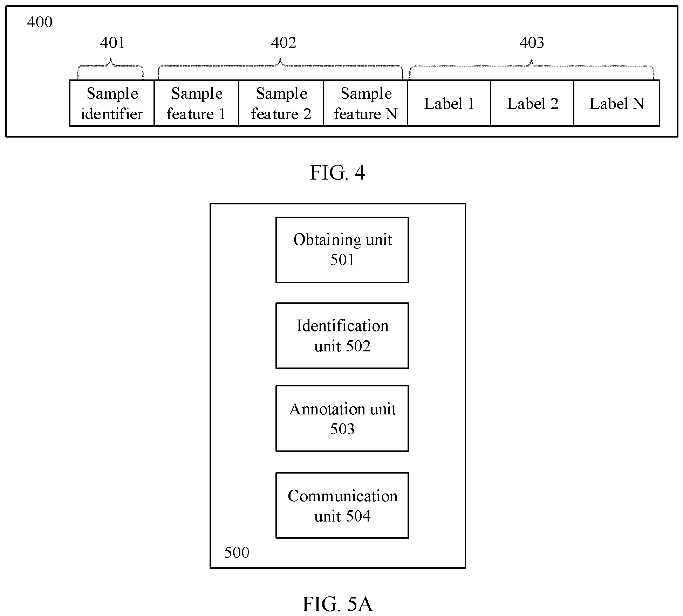

When determining that the sample data is unknown sample data in step S312, in step S313, the edge node 310 annotates the sample data to obtain a first annotation result. In an implementation, a format of an annotation result in this application is shown in FIG. 4, including a sample identifier 401 and/or a sample feature 402. In some embodiments, the annotation result further includes a label 403. The sample identifier 401 is obtained based on an identifier of the sample data, and may be the same as the identifier of the sample data, or may be another identifier generated by using the identifier of the sample data. The sample feature 402 may include one or more key features of the sample data, and/or the sample data itself. The label 403 is a label obtained after the edge node 310 annotates unknown sample data, and there may be one or more labels 403. In an implementation, the sample data annotation system 100 uses a label value of the first annotation result to indicate whether unknown sample data is successfully annotated in step S313. When the edge node 310 successfully annotates the unknown sample data, the first annotation result includes an annotated label. When annotation in step S313 fails, the first annotation result does not include the label or the label value is null. Further, the sample data annotation system 100 may further indicate, by using a dedicated parameter, whether the unknown sample data is successfully annotated in step S313. For example, when a value of the parameter is Tnze, it indicates that the unknown sample data is successfully annotated; and when the value is False, it indicates that the unknown sample data fails to be annotated. In step S314, the edge node 310 sends the first annotation result to the central node 320.

Steps S321-S323 disclose a sample data annotation method applied to the central node 320. After receiving a first annotation result sent by each edge node (for example, 120A, 120B, 120C, and 120D in FIG. 1), the central node 320 determines, in step S321, whether the received first annotation result indicates successful annotation. In an implementation, step S321 may be triggered after the central node 320 receives a specific quantity of first annotation results from each edge node, or is triggered periodically or triggered in any other manner. Further, in an implementation, in step S321, all first annotation results received by the central node 320 are determined, and all the first annotation results are classified into two types: first annotation results indicating successful annotation and first annotation results indicating failed annotation. Then operation processing in step S322 and step S323 is separately performed. Further, when it is determined in step S321 that all the received first annotation results indicate successful annotation, the central node 320 does not perform step S323, or when it is determined in S321 that all the received first annotation results indicate failed annotation, the central node 320 does not perform step S322.

In another implementation, the central node 320 may further perform batch processing on the received first annotation results, that is, divides the first annotation results into several batches. After steps S321-S323 are performed on first annotation results of the first batch, steps S321-S323 are performed again on first annotation results of the second batch, and so on, until all the received first annotation results are processed.

When step S321 indicates that the first annotation result is successfully annotated, step S322 is performed. In step S322, after performing consistency processing on the first annotation result indicating successful annotation, the central node 320 obtains a second annotation result. A format of the second annotation result is shown in FIG. 4. Through similarity division, the central node 320 performs clustering on a plurality of first annotation results including the first annotation result, that is, the central node 320 divides, by using a clustering algorithm, a plurality of first annotation results that are successfully annotated into different groups. First annotation results that belong to a same group include a same sample feature or similar sample features, and first annotation results that belong to different groups have distinct sample features. In an implementation, clustering may be performed in an unsupervised manner, where the unsupervised manner includes K-MEANS (k-means clustering algorithm), KNN (k-nearest neighbors algorithm), and the like. A first annotation result A is used as an example. When labels of first annotation results in a group corresponding to the first annotation result A are inconsistent, the central node 320 performs consistency processing on all annotation results in the group, that is, determines a group label of the group through an ensemble decision, and determines the group label as a new label of each first annotation result in the group, to obtain a second annotation result corresponding to the first annotation result. When the group label is the same as a label of one first annotation result, the central node 320 maintains the first annotation result. In this case, it may be considered that the second annotation result corresponding to the first annotation result is the same as the first annotation result. When the group label is different from a label of one first annotation result, the central node 320 modifies the label of the first annotation result to the group label. In this case, the second annotation result corresponding to the first annotation result is different from the first annotation result. In an implementation, the ensemble decision includes a voting method or a weighted voting method. It is assumed that labels to be determined are respectively {C₁, C₂, ..., Cₖ}. Pre-annotated results of sample data x by T edge nodes 120 of the sample data annotation system 100 are respectively (h₁(x), h₂(x), ..., h_{T}(x)). A relative majority voting method is used, that is, the minority is subordinate to the majority. A label Cᵢ having a largest quantity is a finally determined label in annotation results of the sample data x by the T edge nodes 120, that is, a group label obtained through an ensemble decision. If more than one label obtains the most votes, one label is randomly selected as the group label. The voting method may further be an absolute majority voting method, that is, more than a half of votes are required. Based on the relative majority voting method, in addition to obtaining the most votes, more than a half of votes are required. A weighted voting method is that a vote of the label of the T edge nodes 120 needs to be multiplied by one weight, and finally, weighted votes of a same label are summed, and a label corresponding to a maximum value is a final label, that is, a group label obtained through an ensemble decision.

When step S321 indicates that the first annotation result fails to be annotated, step S323 is performed. In step S323, the central node 320 annotates the first annotation result indicating failed annotation to obtain a third annotation result, and a format of the third annotation result is shown in FIG. 4. In an implementation, the edge node and/or the central node of the sample data annotation system 100 annotates a label for the sample data by using rule matching, rule association, or manual annotation. The rule matching is to annotate, by setting a specific rule, sample data whose sample data feature matches the rule. For example, if a keyword YouTube is found in a domain name system (domain name system, DNS) of a network flow, it may be determined that the network flow is a video stream. The rule association is to determine a same label for a plurality of pieces of sample data associated with each other. If an unknown network flow is always associated with a known network flow, it is determined that the unknown network flow is a network flow of a same type as that of the known network flow. The manual annotation is to manually observe a sample feature and annotate a result.

Further, in an implementation, after obtaining the second and third annotation results, the central node 320 may generate a new unknown sample model or update an original unknown sample model based on the second and third annotation results. The newly generated or updated unknown sample model is sent to the edge node 310. After receiving the unknown sample model, the edge node 310 updates a locally existing unknown sample model.

Further, in an implementation, the edge node 310 or the central node 320 may perform encryption processing on data that is sent, and perform decryption processing on data that is received, where the encrypted/decrypted data includes the first annotation result or the unknown sample model.

The foregoing describes, from a system perspective, the sample data annotation method provided in the embodiment of this application. It may be understood that, to implement the foregoing functions, the edge node or the central node in the embodiment of this application includes a hardware structure and/or a software module for correspondingly implementing each function. A person skilled in the art should easily recognize that functions and steps of examples described in the embodiments disclosed in this application can be implemented in a form of hardware or a combination of hardware and computer software. Whether a function is performed by hardware or hardware driven by computer software depends on particular applications and design constraints of the technical solutions. A person skilled in the art may use different methods to implement the described functions, but such implementations shall not be considered to be beyond the scope of this application.

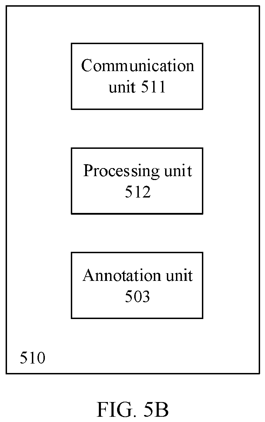

The following describes a structure of a node in this application from different perspectives. To implement the method shown in FIG. 3 of this application, an embodiment of this application provides two types of nodes 500 and 510. As shown in FIG. 5A, the node 500 is applied to an edge node of a sample data annotation system 100, and the node 500 includes an obtaining unit 501, an identification unit 502, an annotation unit 503, and a communication unit 504. In this embodiment of this application, the obtaining unit 501 is configured to perform step S311, the identification unit 502 is configured to perform step S312, the annotation unit 503 is configured to perform step S313, and the communication unit 504 is configured to perform step S314. As shown in FIG. 5B, the node 510 is applied to a central node of the sample data annotation system 100, and the node 510 includes a communication unit 511, a processing unit 512, and an annotation unit 513. The communication unit 511 is configured to receive a first annotation result sent by the edge node 310, the processing unit 512 is configured to perform step S322, and the annotation unit 513 is configured to perform step S323. Each constituent unit of the node 500 or 510 provided in this embodiment of this application is merely an example. A person skilled in the art may add or reduce a constituent unit as required, or may divide a function of one unit to be implemented by a plurality of units.

An embodiment of this application also provides a computer-readable storage medium, configured to store program code for implementing the foregoing sample data annotation method, and instructions included in the program code are used to perform the method procedure in any one of the foregoing method embodiments. The foregoing storage medium may include any non-transitory (non-transitory) machine-readable medium capable of storing program code, such as a USB flash drive, a removable hard disk, a magnetic disk, an optical disc, a random access memory (random access memory, RAM), a solid-state drive (solid-state drive, SSD), or a non-volatile memory (non-volatile memory).

It should be noted that embodiments provided in this application are merely examples. A person skilled in the art may clearly know that, for convenience and conciseness of description, in the foregoing embodiments, embodiments emphasize different aspects, and for a part not described in detail in one embodiment, refer to relevant descriptions of another embodiment. Features disclosed in embodiments, claims, and accompanying drawings of this application may exist independently or exist in a combination. In this embodiment of this application, features described in a hardware form may be performed by software, and vice versa. This is not limited herein.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A sample data annotation system, comprising an edge node and a central node, wherein
the edge node is configured to:
obtain a key feature of sample data;
determine, based on the key feature, whether the sample data is unknown sample data;
when the sample data is unknown sample data, perform annotation processing on the unknown sample data, to obtain a first annotation result; and
send the first annotation result to the central node; and
the central node is configured to:
receive the first annotation result sent by the edge node; and
when the first annotation result indicates that the unknown sample data is successfully annotated, perform consistency processing on the first annotation result to obtain a second annotation result.

2. The system according to claim 1, wherein when the first annotation result indicates that the unknown sample data fails to be annotated, annotation processing is performed on the unknown sample data, to obtain a third annotation result.

3. The system according to claim 1 or 2, wherein when determining, based on the key feature, whether the sample data is unknown sample data, the edge node is configured to:
determine, based on an unknown sample model and the key feature, whether the sample data is unknown sample data.

4. The system according to claim 3, wherein the unknown sample model is generated based on a plurality of key features obtained from a known annotation result set, and the known annotation result set comprises an annotation result obtained by the central node before the unknown sample model is generated.

5. The system according to claim 3 or 4, wherein the unknown sample model comprises a multidimensional coordinate space, a coordinate distance is obtained based on the key feature of the sample data or a mapping feature of the key feature, and it is determined, based on a correlation indicated by the coordinate distance, whether the sample data is unknown sample data.

6. The system according to claim 3 or 4, wherein the unknown sample model comprises a neural network model.

7. The system according to any one of claims 1 to 6, wherein
when the first annotation result indicates that the unknown sample data is successfully annotated, the first annotation result comprises an identifier of the sample data, a sample feature of the sample data, and a label determined by the edge node for the sample data; or
when the first annotation result indicates that the unknown sample data fails to be annotated, the first annotation result comprises an identifier of the sample data and a sample feature of the sample data.

8. The system according to claim 7, wherein a sample feature of the first annotation result comprises the sample data and/or the key feature.

9. The system according to any one of claims 1 to 6, wherein when consistency processing is performed on the first annotation result, the central node is configured to perform clustering on a plurality of first annotation results comprising the first annotation result through similarity division, to obtain a group corresponding to the first annotation result.

10. The system according to claim 9, wherein the central node performs clustering, in an unsupervised manner, on the plurality of first annotation results comprising the first annotation result, and the unsupervised manner comprises one or more of the following: K-MEANS and KNN.

11. The system according to claim 9 or 10, wherein the central node is further configured to: when labels of annotation results in the group are inconsistent, perform an ensemble decision on labels of all annotation results in the group to obtain a group label, and obtain the second annotation result based on the group label.

12. The system according to claim 11, wherein the ensemble decision comprises a voting method or a weighted voting method.

13. The system according to claim 2 or 4, wherein the central node is further configured to generate a new unknown sample model or update the unknown sample data model based on the second annotation result and/or the third annotation result.

14. A sample data annotation method, wherein the method is applied to an edge node of a sample data annotation system, and the method comprises:
obtaining a key feature of sample data;
determining, based on the key feature, whether the sample data is unknown sample data;
when the sample data is unknown sample data, performing annotation processing on the unknown sample data to obtain a first annotation result; and
sending the first annotation result to a central node of the sample data annotation system.

15. The method according to claim 14, wherein the determining, based on the key feature, whether the sample data is unknown sample data comprises:
determining, based on an unknown sample model and the key feature, whether the sample data is unknown sample data.

16. The method according to claim 15, wherein the unknown sample model is generated based on a plurality of key features obtained from a known annotation result set, and the known annotation result set comprises an annotation result obtained by the central node before the unknown sample model is generated.

17. The method according to claim 15, wherein the unknown sample model comprises a multidimensional coordinate space, a coordinate distance is obtained based on the key feature of the sample data or a mapping feature of the key feature, and it is determined, based on a correlation indicated by the coordinate distance, whether the sample data is unknown sample data.

18. The method according to claim 15, wherein the unknown sample model comprises a neural network model.

19. The method according to any one of claims 14 to 18, wherein when the first annotation result indicates that the unknown sample data is successfully annotated, the first annotation result comprises a sample identifier of the sample data, a sample feature of the sample data, and a label determined by the edge node for the sample data; or
when the first annotation result indicates that the unknown sample data fails to be annotated, the first annotation result comprises a sample identifier of the sample data and a sample feature of the sample data.

20. The method according to claim 19, wherein a sample feature of the first annotation result comprises the sample data and/or the key feature.

21. A sample data annotation method, wherein the method is applied to a central node of a sample annotation system, and the method comprises:
receiving a first annotation result sent by an edge node in the sample annotation system, wherein the first annotation result is obtained by the edge node by performing annotation processing on unknown sample data; and
when the first annotation result indicates that the unknown sample data is successfully annotated, performing consistency processing on the first annotation result to obtain a second annotation result.

22. The method according to claim 21, wherein when the annotation result indicates that the unknown sample data fails to be annotated, annotation processing is performed on the unknown sample data, to obtain a third annotation result.

23. The method according to claim 21 or 22, wherein when consistency processing is performed on the first annotation result, a plurality of first registration results comprising the first annotation result are clustered through similarity division, to obtain a group corresponding to the first annotation result.

24. The method according to claim 23, wherein the plurality of first annotation results comprising the first annotation result are clustered in an unsupervised manner, and the unsupervised manner comprises one or more of the following: K-MEANS and KNN.

25. The method according to claim 23 or 24, wherein when labels of annotation results in the group are inconsistent, an ensemble decision is performed on labels of all annotation results in the group to obtain a group label, and the second annotation result is obtained based on the group label.

26. The method according to claim 25, wherein the ensemble decision comprises a voting method or a weighted voting method.

27. The method according to any one of claims 21 to 26, wherein the method further comprises: generating a new unknown sample model or updating an existing unknown sample data model of the central node based on the second annotation result and/or the third annotation result.

28. A node, wherein the node is deployed in a sample data annotation system, and the node comprises:
an obtaining unit, configured to obtain a key feature of sample data;
an identification unit, configured to identify unknown sample data, and determine, based on the key feature, whether the sample data is unknown sample data; and
an annotation unit, configured to: when the sample data is unknown sample data, perform annotation processing on the unknown sample data, to obtain a first annotation result.

29. The node according to claim 28, further comprising:
a communication unit, configured to send the first annotation result to a central node of the sample data annotation system.

30. The node according to claim 28 or 29, wherein the identification unit is further configured to determine, based on an unknown sample model and the key feature, whether the sample data is unknown sample data.

31. The node according to claim 30, wherein the unknown sample model is generated based on a plurality of key features obtained from a known annotation result set, and the known annotation result set comprises an annotation result obtained by the central node before the unknown sample model is generated.

32. The node according to claim 31, wherein the unknown sample model comprises a multidimensional coordinate space, a coordinate distance is obtained based on the key feature of the sample data or a mapping feature of the key feature, and it is determined, based on a correlation indicated by the coordinate distance, whether the sample data is unknown sample data.

33. The node according to claim 31, wherein the unknown sample model comprises a neural network model.

34. The node according to any one of claims 28 to 33, wherein when the first annotation result indicates that the unknown sample data is successfully annotated, the first annotation result comprises a sample identifier of the sample data, a sample feature of the sample data, and a label determined by an edge node for the sample data; or
when the first annotation result indicates that the unknown sample data fails to be annotated, the first annotation result comprises a sample identifier of the sample data and a sample feature of the sample data.

35. The node according to claim 34, wherein a sample feature of the first annotation result comprises the sample data and/or the key feature.

36. A node, wherein the node is deployed in a sample data annotation system, and the node comprises:
a communication unit, wherein the communication unit is configured to receive a first annotation result sent by an edge node in the sample annotation system, and the first annotation result is obtained by the edge node by performing annotation processing on unknown sample data; and
a processing unit, wherein when the first annotation result indicates that the unknown sample data is successfully annotated, the processing unit performs consistency processing on the first annotation result to obtain a second annotation result.

37. The node according to claim 36, wherein the node further comprises an annotation unit; and when the annotation result indicates that the unknown sample data fails to be annotated, the annotation unit performs annotation processing on the unknown sample data to obtain a third annotation result.

38. The node according to claim 36 or 37, wherein when consistency processing is performed on the first annotation result, the processing unit performs clustering on a plurality of first annotation results comprising the first annotation result through similarity division, to obtain a group corresponding to the first annotation result.

39. The node according to claim 38, wherein the processing unit performs clustering, in an unsupervised manner, on the plurality of first annotation results comprising the first annotation result, and the unsupervised manner comprises one or more of the following: K-MEANS and KNN.

40. The node according to claim 38 or 39, wherein when labels of annotation results in the group are inconsistent, the processing unit performs an ensemble decision on labels of all annotation results in the group to obtain a group label, and obtains the second annotation result based on the group label.

41. The node according to claim 40, wherein the ensemble decision comprises a voting method or a weighted voting method.

42. The node according to claims 36 to 41, wherein the node further comprises a model unit, and the model unit generates a new unknown sample model or updates an existing unknown sample data model of the central node based on the second annotation result and/or the third annotation result.
